(19) Europäisches Patentamt
European Patent Office
Office européen des brevets

(11) Veröffentlichungsnummer: **0 069 923**
**B1**

(12) # EUROPÄISCHE PATENTSCHRIFT

(45) Veröffentlichungstag der Patentschrift: **24.10.84**

(51) Int. Cl.³: **C 09 B 1/516,** D 06 P 3/60

(21) Anmeldenummer: **82105856.7**

(22) Anmeldetag: **01.07.82**

(54) **Anthrachinonfarbstoff und dessen Verwendung.**

(30) Priorität: **10.07.81 DE 3127240**

(43) Veröffentlichungstag der Anmeldung: **19.01.83 Patentblatt 83/3**

(45) Bekanntmachung des Hinweises auf die Patenterteilung: **24.10.84 Patentblatt 84/43**

(84) Benannte Vertragsstaaten: **CH DE FR GB IT LI**

(56) Entgegenhaltungen:
**EP-A-0 012 110**
**DE-A-1 794 188**
**DE-A-2 739 176**
**DE-A-2 903 132**
**FR-A-2 086 035**

(73) Patentinhaber: **BASF Aktiengesellschaft, Carl-Bosch-Strasse 38, D-6700 Ludwigshafen (DE)**

(72) Erfinder: **Hartwig, Ernst, Dr., Kastellweg 25, D-6900 Heidelberg (DE)**
Erfinder: **Krallmann, Reinhold, Bachweg 2, D-6719 Weisenheim (DE)**

**EP 0 069 923 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft den Farbstoff der Formel

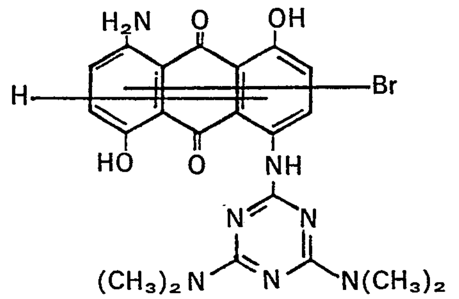

(I)

Zur Herstellung der Verbindung der Formel I kann man z.B. bromiertes Diaminoanthrarufin der Formel

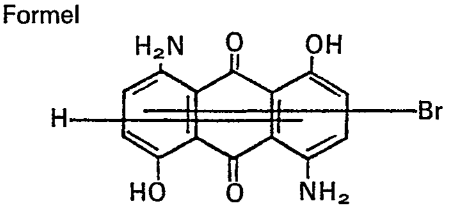

(II)

mit der Verbindung der Formel

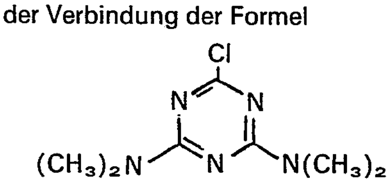

(III)

in an sich bekannter Weise umsetzen.

Man kann die Verbindungen I auch so herstellen, dass man II zunächst mit Cyanurchlorid im Verhältnis 1:1 mol umsetzt und dann die Dichlortriazinylaminoanthrachinonverbindung III mit Dimethylamin in an sich bekannter Weise zu I umsetzt.

Die Umsetzung mit dem Amin kann im Verhältnis 1:2 mol oder in zwei Stufen jeweils im Verhältnis 1:1 mol durchgeführt werden.

Der Farbstoff I kann in reiner, der Formel I entsprechender Form oder in Form von Gemischen vorliegen.

Einzelheiten der Reaktion können dem Beispiel entnommen werden, in dem sich Angaben über Teile und Prozente, sofern nicht anders vermerkt, auf das Gewicht beziehen.

In der FR-A Nr. 2086035 werden u. a. Farbstoffe der Formel

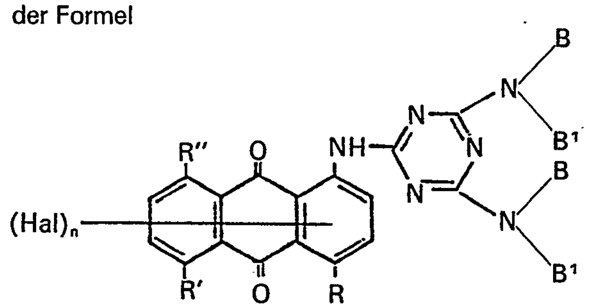

beschrieben, in der B Wasserstoff, $C_1$- bis $C_{18}$-Alkyl, Alkoxyalkyl mit 3 bis 11 C-Atomen oder Cycloalkyl, $B^1$ $C_1$- bis $C_{18}$-Alkyl, Alkoxyalkyl mit 3 bis 11 C-Atomen, Cycloalkyl, Aralkyl oder gegebenenfalls durch $C_1$- bis $C_{12}$-Alkyl oder Alkoxy substituiertes Phenyl, oder

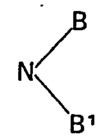

einen heterocyclischen Ring, R u. a. Hydroxy, R' und R" unabhängig voneinander u. a. Hydroxy oder Amino, Hal, Chlor oder Brom und n 0 bis 2 bedeuten.

Nach den Angaben des letzten Satzes der Beschreibung werden diese Farbstoffe zum Färben von synthetischem Fasermaterial, insbesondere von Polyesterfasern verwendet, wobei die Farbstoffe in Form ihrer Lösungen in organischen Lösungsmitteln angewendet werden.

Der erfindungsgemässe Farbstoff ist in der FR-A Nr. 2086035 nicht beschrieben.

Der erfindungsgemässe Farbstoff ist sehr farbstark und eignet sich vorzugsweise zum Färben und Bedrucken von mit Wasser mischbaren Quellmitteln gequollener Cellulose oder Cellulose enthaltendem Fasermaterial, insbesondere Cellulosepolyester, nach dem in der DE-PS Nr. 1811796 beschriebenen Verfahren.

Man erhält Färbungen mit guten Echtheiten, von denen die Licht- und Nassechtheiten hervorzuheben sind.

*Beispiel:*

In 234 Teilen o-Dichlorbenzol werden 52,5 Teile 1,5-Dihydroxy-4,8-diamino-x-bromanthrachinon und 33,5 Teile 2-Chlor-4,6-bisdimethylamino-s-triazin verrührt. Man leitet einen schwachen Stickstoffstrom über die Mischung und erhitzt sie solange unter Rühren und Rückfluss, bis alles Ausgangsmaterial verbraucht ist, was in etwa 2 bis 3 h der Fall ist. Nun lässt man den Ansatz unter langsamem Rühren auf Raumtemperatur abkühlen und saugt den schön kristallin angefallenen Farbstoff scharf auf einer Nutsche ab. Der o-dichlorbenzolfeuchte Filterkuchen wird durch Wasserdampfdestillation vom Lösungsmittel befreit, wobei man etwas Ammoniakwasser bis zur deutlich alkalischen Reaktion zusetzt. Man saugt noch warm ab, wäscht mit warmem Wasser neutral und erhält nach dem Trocknen 64,6 Teile eines dunkelblauen Kristallpulvers, das bei etwa 250° C schmilzt und laut Analyse folgende Konstitution hat

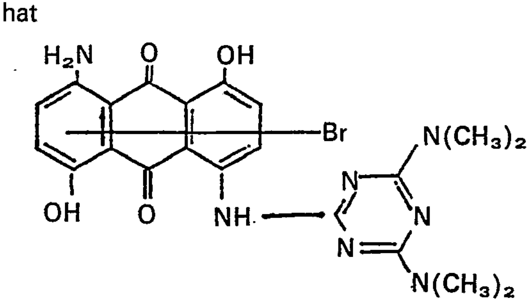

Der Farbstoff fixiert auf Polyesterbaumwolle in klaren blauen Farbtönen von hohen Echtheitseigenschaften und sehr guter Ton-in-Ton-Übereinstimmung.

Anstatt o-Dichlorbenzol lassen sich mit gutem Erfolg andere inerte Kohlenwasserstoffe, z.B. Toluol, Xylol, Chlorbenzol, Trichlorbenzol, Nitrobenzol, p-Cymol oder Alkylbenzolgemische verwenden. Besonders geeignet sind Xylol und Alkylbenzolgemische, die unter dem Namen Solvesso im Handel erhältlich sind.

## Patentansprüche

1. Farbstoff der Formel

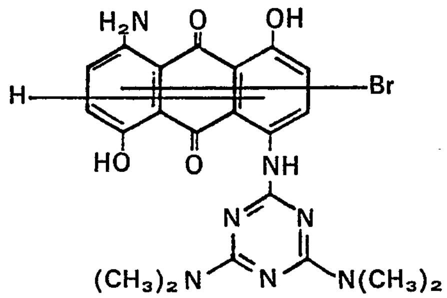

2. Verwendung des Farbstoffs gemäss Anspruch 1 zum Färben und Bedrucken von mit Wasser mischbaren Quellmitteln gequollener Cellulose oder Cellulose enthaltendem Fasermaterial.

## Revendications

1. Colorant de formule

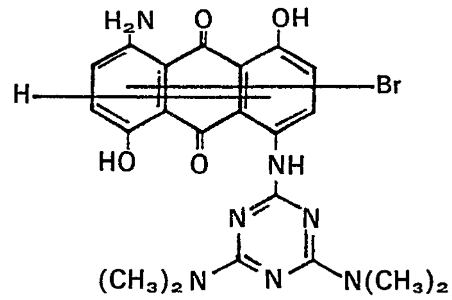

2. Utilisation du colorant suivant la revendication 1 pour la teinture et l'impression de la cellulose gonflée au moyen d'agents gonflants miscibles à l'eau ou d'une matière fibreuse contenant de la cellulose.

## Claims

1. The dye of the Formula

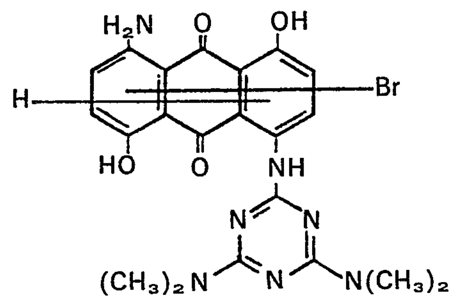

2. The use of the dye as claimed in Claim 1 for dyeing and printing cellulose or cellulose-containing fibre material swollen by means of water-miscible swelling agents.